# EUROPEAN PATENT SPECIFICATION

(11) **EP 0 410 461 B1**
(45) Date of publication and mention of the grant of the patent: **19.07.1995**
(21) Application number: 90114385.9
(22) Date of filing: 26.07.1990
(51) Int. Cl.: H04N 1/32

(54) **Facsimile communication device**
Faksimileübertragungsgerät
Dispositif de communication fac-similé

(30) Priority: 28.07.1989 JP 197277/89
(43) Date of publication of application: 30.01.1991
(73) Proprietor: SHARP KABUSHIKI KAISHA, Osaka (JP)
(72) Inventor: Matsuda, Toshihiro, Yamatokoriyama-shi, Nara-ken (JP); Moriya, Daisuke, Yamatokoriyama-shi, Nara-ken (JP)
(74) Representative: TER MEER STEINMEISTER & PARTNER GbR

(56) References cited:
- EP-A- 0 244 869
- EP-A- 0 310 001
- US-A- 4 502 080
- US-A- 4 833 705

## Description

### BACKGROUND OF THE INVENTION

### 1. Field of the Invention

The present invention relates to a facsimile communication device.

### 2. Description of the Related Art

A facsimile communication device which is used as a sort of communication devices is in wider use of transferring image data, compared with a communication device like a telephone used only for transmitting sound. In recent years, this type of facsimile communication devices has widely employed a function named "sequential data concurrent transmission". The sequential data concurrent transmission is the function that, by depressing, for exampe, a sequential data concurrent transmission button, a facsimile communication device storing a plurality of facsimile numbers of other facsimile communication devices reads an original document set in the device and stores its data in an image memory to sequentially transfer contents of the image memory to the plurality of facsimile devices. Also widely employed has been a function named "transmission request", which is the function that a facsimile communication device designates one or more other facsimile communication devices and makes them read an original document set in the former and transmit image data through remote control.

A conventional facsimile communication device having such functions as stated above comprises operating means like a sequential data transmission button, a transmission request button and the like, separately; and hence, with such devices, there arises the problem that its structure is complicated and its operability degrades.

As a similar example of the art, a facsimile control system (Japanese Unexamined Patent Publication JP-A-57160262) is known, in which simply turning on a single switch for polling enables two functions, "permission of polling-transmission" and "commencement of polling-receiving", and the "permission of polling-transmission" is automatically released when the polling-transmission is normally completed, so as to prevent malfunctions caused by the next operation, while the condition of the "permission of polling-transmission" is retained when the polling-transmission is abnormally interrupted, so as to enable the recommencement of receiving by calling a receiving station, or a remote receiver, again. Also, a facsimile device capable of switching between a polling-standby mode and a polling-receiving mode (Japanese Unexamined Patent Publication JP-A-59148464) is known.

As a related prior application by the applicant of the present invention, there are some facsimile communication devices: An embodiment of the devices has an automatic receiving function capable of satisfying both of a demand for telephonic communication and a demand for facsimile communication from a transmitter (Japanese Unexamined Patent Publication JP-A-01090657 and JP-A-01090661). Another embodiment has an automatic receiving function capable of satisfying both of a demand for telephonic communication and a demand for facsimile communication from a transmitter and capable of satisfying a demand for facsimile communication from a manual dialing facsimile communication device (Japanese Unexamined Patent Publication JP-A-01090658). Still another embodiment has an automatic receiving function capable of satisfying both of a demand for telephonic communication and a demand for facsimile communication from a transmitter and capable of informing the transmitting station that the device has satisfied the demand for telephonic communication (Japanese Unexamined Patent Publication No. JP-A-01090659/1989). Yet another embodiment is capable of satisfying both of a demand for telephonic communication and a demand for facsimile communication from a transmitter, and is capable of informing the operators on both transmitting and receiving parties that the device of the receiving station is in use for satisfying the demand for telephonic communication (Japanese Unexamined Patent Publication JP-A-01090660).

The prior application published under EP-A-0 390 597 (state of the art under art. 54(3) EPC) discloses a facsimile communication device comprising designating means for designating identifying data of another facsimile communication device to or from which image data of an original document should be transmitted; original document detecting means for detecting whether or not the original document to be transmitted has been set; and control means for reading outputs from the designating means and original document detecting means and controlling data transmission; if an original document has been set when the designating means designates identifying data, the another facsimile communication device corresponding to the identifying data and to which image data should be transmitted being called to receive the image data of the original document transmitted by the control means, and if the original document has not been set when the designating means designates the identifying data, the another facsimile communication device corresponding to the identifying data and from which the image data should be transmitted being called and required by the control means that the image data should be transmitted from it.

With a facsimile communication device thus structured, the designating means designates the identifying data of other facsimile communication devices, and then the original detecting means detects the existence of the original documents in the devices, where the control means receives outputs from these means. If the detecting means detects the existence of the original document when the designating means designates the identifying data, the control means calls other facsimile communication devices to which image data should be transmitted, corresponding to the identifying data; and image data of the original document is transferred to those facsimile communication devices. If the original document detecting means detects the absence of the original document when the designating means designates the identifying data, the control means calls other facsimile devices from which image data should be transmitted, corresponding to the identifying data; and those facsimile communication devices are asked to transmit image data.

In this way, there is no need to provide individual input means such as buttons for a function of transmitting image data to the facsimile communication devices to which image'data should be transmitted, for a function of asking the facsimile communication devices from which image data should be transmitted to transmit image data, etc..

### SUMMARY OF THE INVENTION

It is an object of the present invention to provide a facsimile communication device of which the system architecture allows the user to select more conveniently the identifying data stored in a storage of the device in order to establish communication connections to one or more other communication devices.

The facsimile communication device of the present invention comprises the features of appended claim 1.

### BRIEF DESCRIPTION OF THE DRAWINGS

Fig. 1 is a block diagram for explaining a system architecture of an embodiment according to the present invention;
Fig. 2 is a plan view showing a control panel;
Fig. 3 is a diagram for explaining contents stored in a RAM;
Fig. 4 is a diagram for explaining contents stored in a group area in the RAM; and
Figs. 5(a) and 5(b) are flow charts for explaining the operation of the present invention.

### DESCRIPTION OF THE PREFERRED EMBODIMENT

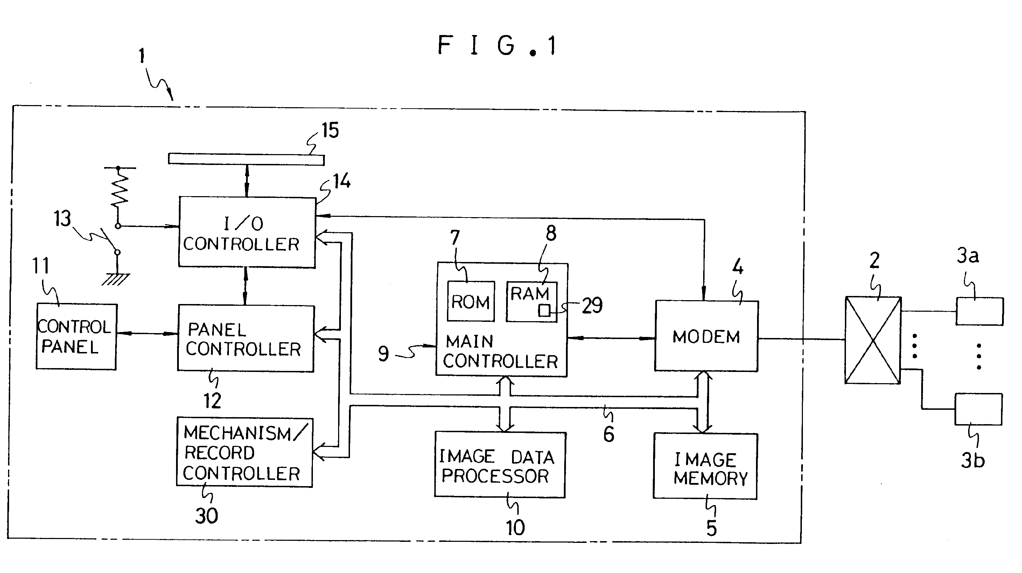

Fig. 1 is a block diagram for explaining a system architecture of an embodiment according to the present invention. Referring to Fig. 1, a facsimile communication device (shortened as "facsimile device" hereinafter) 1 of the embodiment according to the present invention is connected to a plurality of facsimile devices 3a, ..., 3b (reference numeral "3" denotes them in general) through a telephone network 2. The facsimile device 1 of this embodiment fulfills "sequential data concurrent transmission" which is a function of sequentially transmitting image data of an original document that the facsimile device 1 reads to the plurality of facsimile devices 3 connected to the facsimile device 1 and "transmission request" which is a function of polling the facsimile devices 3 to make the facsimile devices 3 read the original document set therein and transfer image data to the facsimile device 1.

The facsimile device 1 includes a modem 4 for modulating/demodulating image data transferred to and from the telephone network 2 and an image memory 5 for storing image data obtained by reading an original document or received image data. The modem 4 and the image memory 5 are connected through a bus line 6 to a main control unit 9 which is a control means including a ROM (Read Only Memory) 7 storing a program for determining the operation of the facsimile device 1 and fixed data, a RAM (Random Access Memory) 8 temporarily storing data required for the operation of the facsimile device 1, a microprocessor and the like.

The bus line 6 connects to an image data processing unit 10 for processing image data, a panel control unit 12 for controlling a control panel 11 provided with various keys as mentioned below, a mechanism/record control unit 30 for controlling the rotation of a platen roller and the like, an original document sensor 13 as original document detecting means provided cooperatively with an original document holding member for detecting whether or not an original document has been set in the original document holding member, and an input/output control unit 14 for inputting data of the original document.

The original document sensor 13 may be an optical detecting means composed of mechanical switches such as limit switches, light emitting elements and light receiving elements. The input/output control unit 14 is connected to reading means 15 formed of a line image sensor or the like, for reading the original document.

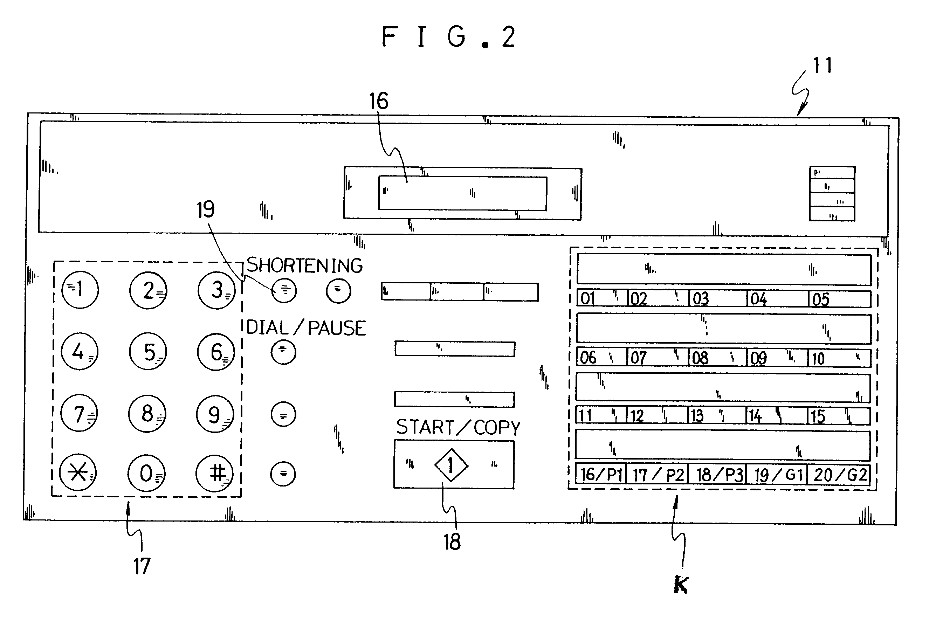

Fig. 2 is a plan view showing the control panel 11. Referring to Fig. 2, the control panel 11 includes a display unit 16 formed, for example, of a liquid crystal display element, register keys 17 including numeral "0" to "9" keys, a "*" key, a "#" key, etc., a start key 18 for starting the operation, for example, of reading the original document and then transferring image data, and a plurality of (20 in this embodiment) keys K1 to K20 (reference numeral K denotes them in general, if necessary) as designating means for designating identifying data of other facsimile devices 3 to or from which image data should be transmitted. The keys K1 to K20 are each correlated with a facsimile number which represents identifying data for one of the facsimile devices 3a, ..., 3b, using the register keys 17, and the relations are stored in the RAM 8.

When one of the keys K1 to K20 is depressed, one of the facsimile numbers, which has been correlated with the depressed key and stored, is read, and facsimile transmission starts automatically; and this is termed as "direct transmission" hereinafter. The control panel 11 also includes a shortening key 19. When a two-digit number in a predetermined range is inputted by the register keys 17 with the shortening key 19 depressed, a facsimile number stored beforehand corresponding to the number is read, and facsimile transmission is able to start. In this embodiment, the keys K19 and K20, for example, among the keys K1 to K20 function to store a plurality of facsimile numbers.

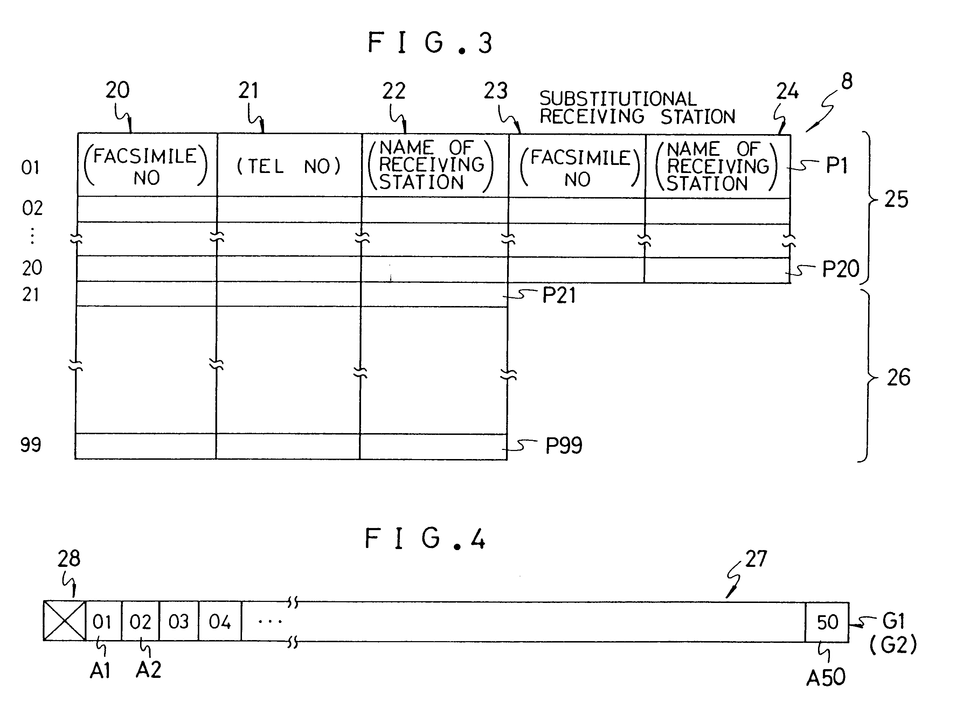

Fig. 3 is a diagram for explaining contents stored in the RAM 8 of the facsimile device 1. Referring to Fig. 3, the RAM 8 is provided with an area in which facsimile numbers and the like are stored; for example, a range of addresses 01 to 99. Twenty rows P1 to P20 corresponding to the addresses 01 to 20 constitute a direct area 25 which corresponds to the above direct transmission function. These rows include a facsimile number column 20, a telephone number column 21 and a column 22 of a name of a receiving station where character data and the like are stored for displaying the name of the receiving station on the display unit 16.

Further, for cases when image data cannot be transmitted due to abnormality in the line or when calling a facsimile communication device having a facsimile number corresponding to the facsimile number column 20, a facsimile number column 23 containing the facsimile number of a substitutional facsimile communication device for receiving image data instead and a column 24 containing the name of the substitutional receiving station are provided. On the other hand, in the addresses 21 to 99, there is provided a shortened number area 26 corresponding to a shortened signal generating function following a direct area 25 corresponding to the above-mentioned direct transmission function, which are provided with rows P21 to P99 corresponding to the addresses 21 to 99 and with the above-mentioned facsimile number column 20, the telephone number column 21 and the column 22 of a name of a receiving station.

When facsimile numbers and the like correlated with the keys K1 to K20 are set as shown in Fig. 3, by depressing one of the keys K1 to K20, a facsimile number or a telephone number in one of the rows P1 to P20 is read, and facsimile communication or telephone communication can be established. If a facsimile device in the receiving station is in use, the line is connected to a facsimile number stored in the facsimile number column 23, and then image data is transferred. When a two-digit number is inputted using the register keys 17 after the shortening key 19 is depressed, a facsimile number or a telephone number in one of the rows P21 to P99 is read, and thus image data can be transferred or telephone communication can be established.

Fig. 4 is a diagram showing contents of a group storage area 27 stored in the RAM 8. The group storage area 27 includes an identifier sector 28 used as a flag showing whether or not the key K19 or K20 is provided as a so-called group key including a plurality of facsimile numbers, and 50 shortened number data sectors A1 to A50.

By depressing the key K19 thus correlated with the plurality of facsimile numbers, the shortened number data set in the shortened number data sectors A1 to A 50 is read, an address related to the shortened number area 26 in the RAM 8 is generated, and then image data can be transferred and telephone communication can be established.

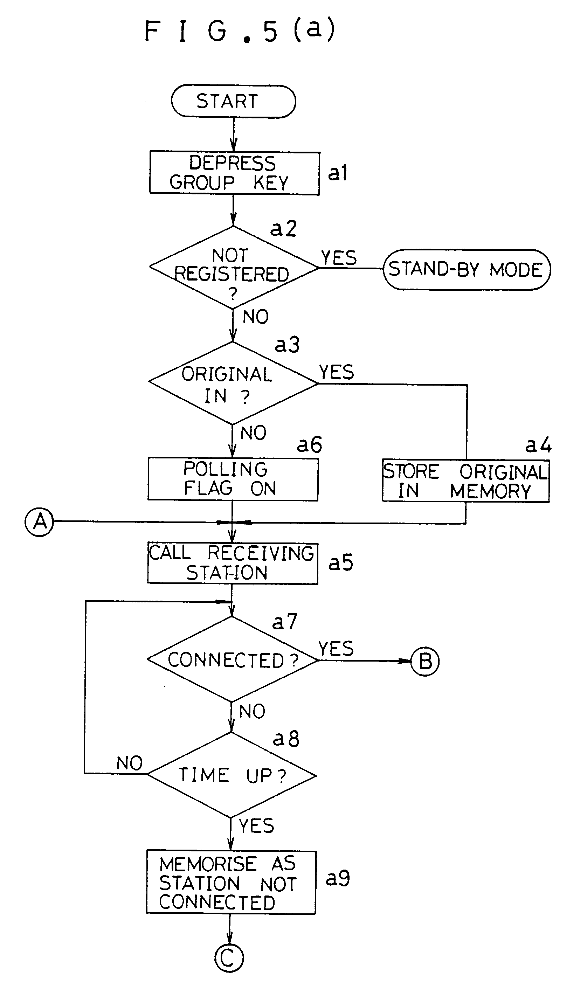

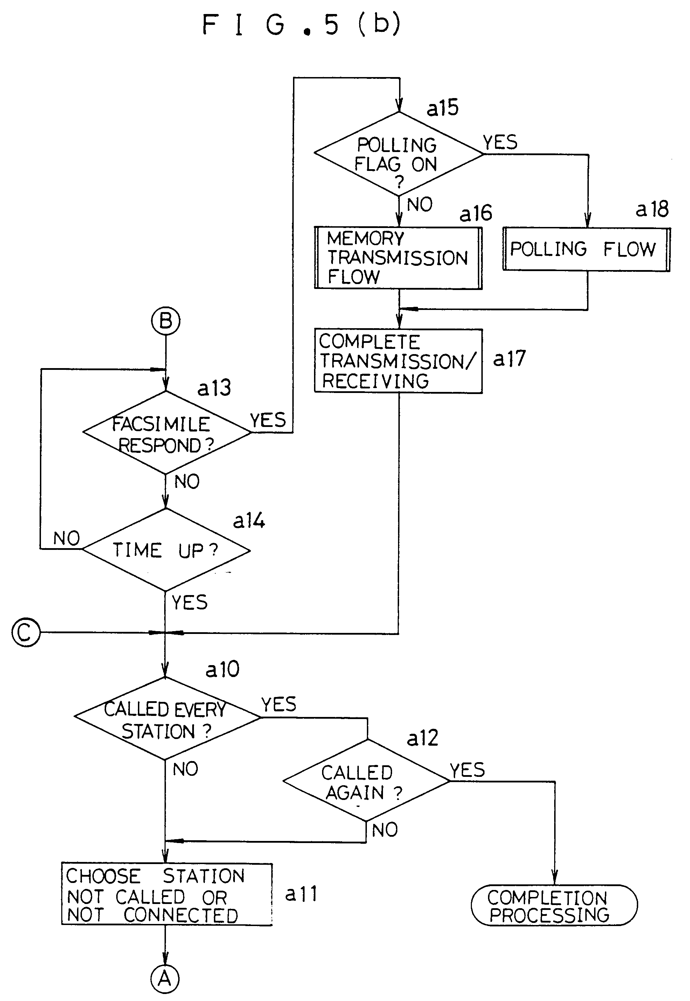

Figs. 5(a) and 5(b) are flow charts for explaining the operation of this embodiment. The operation of this embodiment will be explained hereinafter in conjunction with Figs. 5(a) and 5(b). At step a1, the key K20 or K19 is depressed. To detect that the key K19 or K20 is provided as a group key, a state of the identifier sector 28 is read. At step a2, it is judged whether or not shortened numbers and the like have registered in group sectors G1, G2 corresponding to the keys K19 and K20. If not registered, it turned to a standby state. If the answer is affirmative at step a2, the procedure proceeds to step a3, and the original document sensor 13 detects if the original document has been set. If detected, image data of the original document is stored in the image memory 5 at step a4, and the procedure proceeds to step a5. If the answer is negative at step a3, the procedure proceeds to step a6. At step a6, a flag is set in a polling flag sector 29, and the procedure proceeds to step a5.

At step a5, one of the shortened numbers set as shown in Fig. 4 is stored in a group sector G1, the shortened number is converted into an address in the shortened number area in the RAM 8 to read a facsimile number of the address, and thus the facsimile devices 3 are called. At step a7, it is judged whether or not the connection is established. If the answer is negative, the procedure proceeds to step a8, and it is judged whether or not a predetermined period of time has elapsed. The lapse of the predetermined period of time means that the line cannot be connected to the receiving station, and thus the procedure proceeds to step a9. At step a9, the number of the receiving station is stored as a station which could not be connected.

Thereafter, the procedure proceeds to step a10, and it is judged whether or not the calling operation is completed with regard to all the shortened numbers set in the group sector G1. If the answer is negative, the procedure proceeds to step all, and a shortened number in the group sector G1 which has not been called is read. Otherwise, the station which could not be connected at step a9 is chosen, the procedure proceeds to step a5. If the answer is affirmative at step a10, the procedure proceeds to step a12, and it is judged whether or not the facsimile devices 3 which were called but not connected because the line is busy has been called again. The answer is negative, the procedure proceeds to step all, and the above-mentioned procedure is carried out again. If the answer is affirmative at step a12, such a sequential concurrent transmission is completed.

If the answer is affirmative at step a7 and the connection with the facsimile devices 3 are established, the procedure proceeds to step a13, and it is judged whether or not the facsimile devices 3 transmitted a facsimile response signal. If the answer is negative, the procedure proceeds to step a14, and it is judged whether or not a predetermined period of time has elapsed. If the answer is negative, the facsimile response signal is waited. If the answer is affirmative, the procedure proceeds to step a10.

If the answer is affirmative at step a13, the procedure proceeds to step a15, and it is judged whether or not a polling flag in the polling flag sector 29 is set. If the answer is negative, the original document was set at step a3, and image data in the image memory 5 is read. Thus, the procedure proceeds to step a16, and image data is transmitted to the facsimile devices 3 to which the connection was established at step a7.

At step a17, a final processing of data transmission/receiving is performed, and the procedure goes back to step a10. If the answer is affirmative at step a15, the procedure proceeds to step a18, and one of the facsimile devices 3 is caused to read the original documents set therein and transmit image data to the facsimile device 1. After that, the procedure proceeds to step a17, and the above-mentioned processing is carried out again.

As has been described, according to this embodiment, the shortened numbers are set as shown in Fig. 4. By depressing the keys K19, K20 used as the group keys, when the original document sensor 13 detects that the original document is set, the above-mentioned sequential concurrent transmission function is utilized to transfer image data to the facsimile devices 3 which correspond to the shortened number set in the key K19.

On the other hand, if the original document sensor 13 detects that the original document is not set when the key K19 is depressed, the main control unit 9 sequentially designates the facsimile devices 3 corresponding to a shortened dial number set in the key K19 as shown in Fig. 4, and then makes one of the facsimile devices 3 read the original document set therein and transmit image data read from the original document to the facsimile device 1. In this way, the transmission request operation is sequentially performed.

As stated above, according to the present invention, there is no need to provide operating means specific to each function, such as key switches for setting the facsimile device 1 in the transmission request mode and key switches for setting the same in the sequential concurrent transmission mode, whereby its system architecture is considerably simplified. Also, there is no need to use the above-mentioned individual operating means in performing the transmission request and the sequential concurrent transmission, whereby the operability of the facsimile device 1 is considerably enhanced.

As has been described, according to the present invention, when it is detected that an original document is set when keys are depressed, image data of the original document is transferred to a plurality of facsimile communication devices corresponding to the identifying data. When it is detected that the original document is not set when the keys are depressed, the facsimile devices corresponding to the identifying data are sequentially asked to transmit image data.

In this way, there is no need to provide individual input means such as buttons for a function of sequentially transmitting image data to a plurality of facsimile communication devices, for a function of sequentially asking the plurality of facsimile communication devices to transmit image data, etc., whereby its system architecture can be considerably simplified, the necessity of setting and performing the individual functions is eliminated, and the operability is improved.

## Claims

1. A facsimile communication device (1) capable of sending first image data corresponding to first original document set therein and also capable of receiving other image data corresponding to other original documents emanating from other facsimile communication devices (3a,...,3b), said facsimile communication device (1) comprising:
designating means (K1-K20) for selecting at least one of said other facsimile communication devices (3a,...,3b);
group key means (K19,K20) comprised in said designating means (K1-K20) for sequentially designating identifying data of a plurality of said other facsimile communication devices (3a,...,3b) to which said first image data of said first original document should be transmitted or from which said other image data should be transmitted;
original document detecting means (13) for detecting whether or not said first original document to be transmitted has been set; and
control means (9) being responsive to said designating means (K1-K20) and said detecting means (13) for controlling data transmission;
said control means (9) operating so that if said first original document has been set when said group key means (K19,K20) designates identifying data, said plurality of other facsimile communication devices (3a,...,3b) corresponding to the identifying data and to which image data should be transmitted are sequentially called to receive the first image data of the first original document, and if the first original document has not been set when said group key means (K19,K20) designates the identifying data, said plurality of other facsimile communication devices (3a,...,3b) corresponding to the identifying data and from which the other image data should be transmitted are sequentially called and said other image data is caused to be transmitted from said other devices; and said facsimile communication device (1) further including group storage means (8) for storing said identifying data of a plurality of said other facsimile communication devices (3a,...,3b) and for further storing a data group including a plurality of shortened number data each of which is associated with one of said other facsimile communication devices (3a,...,3b), each of the shortened number data being read out from the group storage means (8) and cause said control means (9) to sequentially call said selected plurality of said other facsimile communication devices when said group key means (K19,K20) is operated.

2. A device as claimed in claim 1, **characterized in that** the identifying data is a facsimile number.

3. A device as claimed in claim 1 or 2, **characterized in that** said designating means includes a plurality of keys (K1-K20) each of which corresponds to one of the facsimile numbers of a plurality of facsimile communication devices (3a, ..., 3b).

4. A device as claimed in claim 3, **characterized by** comprising a RAM (8) for storing the facsimile numbers of said plurality of facsimile communication devices (3a, ..., 3b) which correspond respectively to said plurality of keys (K1-K20).

5. A device as claimed in one of the claims 1 to 4, **characterized in that** said original document detecting means (13) includes an original document sensor which is disposed in association with an original document holding member, for detecting whether or not the original document has been set in said original document holding member.

6. A device as claimed in one of the preceding claims, further comprising means for detecting the unavailability of said other facsimile communication devices (3a,...,3b) designated by said designating means (K1-K20), and
means responsive to said unavailability detection for causing said designating means to designate identifying data associated with a substitutional facsimile communication device for said detected unavailable devices.

## Patentansprüche

1. Faksimileübertragungsgerät (1) zum Senden erster Bilddaten entsprechend einem ersten Vorlagendokument und zum Empfangen von durch andere Faksimileübertragungsgeräte (3a, ..., 3b) ausgesandte Bilddaten entsprechend anderen Vorlagendokumenten, mit:
- einer Spezifiziereinrichtung (K1 - K20) zum Auswählen mindestens eines der anderen Faksimileübertragungsgeräte (3a, . .., 3b);
- einer Gruppentasteneinrichtung (K19, K20) innerhalb der Spezifiziereinrichtung (K1 - K20) zum sequentiellen Spezifizieren von Kennungsdaten mehrerer der anderen Faksimileübertragungsgeräte (3a, ..., 3b), an die die ersten Bilddaten des ersten Vorlagendokuments übertragen werden sollen oder von denen die genannten anderen Bilddaten gesendet werden sollen;
- einer Vorlagendokument-Erkennungseinrichtung (13) zum Erkennen, ob das zu übertragende erste Vorlagendokument eingelegt ist oder nicht; und
- einer Steuereinrichtung (9), die auf die Spezifiziereinrichtung (K1 - K20) und die Erkennungseinrichtung (13) anspricht, um Datenübertragung zu steueren;
- wobei die Steuereinrichtung (9) so arbeitet, daß dann, wenn ein erstes Vorlagendokument eingelegt ist, wenn die Gruppentasteneinrichtung (K19, K20) Kennungsdaten spezifiziert, die mehreren anderen Faksimileübertragungsgeräte (3a, ..., 3b), die den Kennungsdaten entsprechen und an die Bilddaten übertragen werden sollen, sequentiell angerufen werden, um die ersten Bilddaten des ersten Vorlagendokuments zu empfangen, und wenn kein erstes Vorlagendokument eingelegt ist, wenn die Gruppentasteneinrichtung (K19, K20) Kennungsdaten spezifiziert, die mehreren anderen Faksimileübertragungsgeräte (3a, ..., 3b), die den Kennungsdaten entsprechen und von denen die anderen Bilddaten gesendet werden sollen, sequentiell angerufen werden und veranlaßt wird, daß die anderen Bilddaten von den anderen Geräten gesendet werden; und
- wobei das Faksimileübertragungsgerät (1) ferner eine Gruppenspeichereinrichtung (8) aufweist, zum Abspeichern der Kennungsdaten mehrerer der anderen Faksimileübertragungsgeräte (3a, ..., 3b) und zum weiteren Abspeichern einer Datengruppe, die mehrere verkürzte Nummerndaten beinhaltet, wobei jeder Datenwert einem der anderen Faksimileübertragungsgeräte (3a, ..., 3b) zugeordnet ist, wobei jeder verkürzte Nummerndatenwert aus der Gruppenspeichereinrichtung (8) ausgelesen wird und dafür gesorgt wird, daß die Steuereinrichtung (9) sequentiell die ausgewählten mehreren unter den anderen Faksimileübertragungsgeräten anruft, wenn die Gruppentasteneinrichtung (K19, K20) betätigt wird.

2. Gerät nach Anspruch 1, **dadurch gekennzeichnet, daß** der Kennungsdatenwert eine Faksimilenummer ist.

3. Gerät nach einem der Ansprüche 1 oder 2, **dadurch ge****kennzeichnet, daß** die Spezifiziereinrichtung mehrere Tasten (K1 - K20) beinhaltet, von denen jede' einer der Faksimilenummern mehrerer Faksimileübertragungsgeräte (3a, ..., 3b) entspricht.

4. Gerät nach Anspruch 3, **gekennzeichnet durch** einen RAM (8) zum Abspeichern der Faksimilenummern der mehreren Faksimileübertragungsgeräte (3a, ..., 3b), die jeweils den mehreren Tasten (K1 - K20) entsprechen.

5. Gerät nach einem der Ansprüche 1 bis 4, **dadurch gekennzeichnet, daß** die Vorlagendokument-Erkennungseinrichtung (13) einen Vorlagendokumentsensor beinhaltet, der in Zuordnung zu einem Vorlagendokument-Halteteil vorhanden ist, um zu erkennen, ob ein Vorlagendokument in das Vorlagendokument-Halteteil eingelegt ist oder nicht.

6. Gerät nach einem der vorstehenden Ansprüche, ferner mit
- einer Einrichtung zum Erkennen, daß dasjenige der anderen Faksimileübertragungsgeräte (3a, ..., 3b), das von der Spezifiziereinrichtung (K1 - K20) spezifiziert wird, nicht verfügbar ist, und
- einer Einrichtung, die auf die Nichtverfügbarkeitserkennung reagiert, um die Spezifiziereinrichtung dazu zu veranlassen, einen Kennungsdatenwert zu spezifizieren, der einem Ersatz-Faksimileübertragungsgerät für die erkannten nicht verfügbaren Geräte zugeordnet ist.

## Revendications

1. Dispositif de communication par télécopie (1) capable d'envoyer de premières données d'image correspondant à un premier document original placé dans le dispositif, et capable également de recevoir d'autres données d'image correspondant à d'autres documents originaux en provenance d'autres dispositifs de communication par télécopie (3a, ..., 3b), ledit dispositif de communication par télécopie (1) comprenant:
des moyens de désignation (K1 à K20) pour sélectionner l'un au moins desdits autres dispositifs de communication par télécopie (3a, ..., 3b);
des moyens formant touches de groupe (K19, K20) compris dans lesdits moyens de désignation (K1 à K20) pour désigner séquentiellement des données d'identification d'une multiplicité de dispositifs parmi lesdits autres dispositifs de communication par télécopie (3a,..., 3b) auxquels lesdites premières données d'image dudit premier document original doivent être transmises ou à partir desquels lesdites autres données d'image doivent être transmises;
des moyens de détection de document original (13) pour détecter si ledit premier document original à transmettre a été ou non placé; et
des moyens de commande (9) sensibles auxdits moyens de désignation (K1 à K20) et auxdits moyens de détection (13) pour commander la transmission des données;
lesdits moyens de commande (9) fonctionnant de telle manière que si ledit premier document original a été placé lorsque lesdits moyens formant touches de groupe (K19, K20) désignent des données d'identification, ladite multiplicité d'autres dispositifs de communication par télécopie (3a,..., 3b), correspondant aux données d'identification et auxquels des données d'image doivent être transmises, soient appelés séquentiellement pour recevoir les premières données d'image du premier document original, et que si le premier document original n'a pas été placé lorsque lesdits moyens formant touches de groupe (K19, K20) désignent les données d'identification, ladite multiplicité d'autres dispositifs de communication par télécopie (3a,..., 3b), correspondant aux données d'identification et à partir desquels les autres données d'image doivent être transmises, soient séquentiellement appelés et qu'il soit fait en sorte que lesdites autres données d'image soient transmises à partir desdits autres dispositifs; et ledit dispositif de communication par télécopie (1) comprenant, en outre, des moyens d'emmagasinage de groupe (8) pour emmagasiner lesdites données d'identification d'une multiplicité de dispositifs parmi lesdits autres dispositifs de communication par télécopie (3a,..., 3b) et pour, en outre, emmagasiner un groupe de données contenant une multiplicité de données de numérotation abrégée dont chacune est associée à l'un desdits autres dispositifs de communication par télécopie (3a,..., 3b), chacune des données de numérotation abrégée étant extraite des moyens d'emmagasinage de groupe (8) et amenant lesdits moyens de commande (9) à appeler séquentiellement ladite multiplicité sélectionnée desdits autres dispositifs de communication par télécopie lorsque lesdits moyens formant touches de groupe (K19, K20) sont actionnés.

2. Dispositif selon la revendication 1, caractérisé en ce que les données d'identification représentent un numéro de télécopie.

3. Dispositif selon la revendication 1 ou la revendication 2, caractérisé en ce que lesdits moyens de désignation comprennent une multiplicité de touches (K1 à K20) dont chacune correspond à l'un des numéros de télécopie d'une multiplicité de dispositifs de communication par télécopie (3a,..., 3b).

4. Dispositif selon la revendication 3, caractérisé en ce qu'il comprend une mémoire RAM (8) pour emmagasiner les numéros de télécopie de ladite multiplicité de dispositifs de communication par télécopie (3a,..., 3b) qui correspondent, respectivement, à ladite multiplicité de touches (K1 à K20).

5. Dispositif selon l'une quelconque des revendications 1 à 4, caractérisé en ce que lesdits moyens de détection de document original (13) comprennent un capteur de document original, qui est disposé en association avec un élément de maintien de document original, pour détecter si le document original a été, ou non, placé dans ledit élément de maintien de document original.

6. Dispositif selon l'une quelconque des revendications précédentes, comprenant, en outre, des moyens pour détecter la non-disponibilité desdits autres dispositifs de communication par télécopie (3a,..., 3b) désignés par lesdits moyens de désignation (K1 à K20), et des moyens sensibles à ladite détection de non-disponibilité pour faire en sorte que lesdits moyens de désignation désignent des données d'identification associées à un dispositif de communication par télécopie de substitution pour lesdits dispositifs non disponibles détectés.
